# EUROPEAN PATENT APPLICATION

(11) **EP 1 739 890 A2**
(43) Date of publication of application: **03.01.2007**
(21) Application number: 06450089.5
(22) Date of filing: 26.06.2006
(51) Int. Cl.: H04L 12/403

(54) **Processing of data frames exchanged over a communication controller in a time-triggered system**

(30) Priority: 28.06.2005 AT 10912005
(71) Applicant: Tttech Computertechnik AG, 1040 Wien (AT)
(72) Inventor: Delvai, Martin, 1220 Wien (AT); Angelow, Harald, 1070 Wien (AT); Könighofer, Gerhard, 2620 Neunkirchen (AT)
(74) Representative: Patentanwaltskanzlei Matschnig

(57) **Abstract**

For processing data frames which are exchanged over a communication controller (12) between a host computer (11) and a time-triggered communication network (13), a data frame is read by a processor means (2) located in the communication controller from an interface data storage means (14) accessible over a first interface (If1), the data contained in the data frame is processed according to packaging information contained in a configuration table, and portions of the user data are stored in the data frame in an associated memory range or set of registers of the interface data storage means as defined in the packaging information.

## Description

### Field of the invention and description of prior art

The invention relates to the processing of data frames which are exchanged over a communication controller between a host computer and a time-triggered communication network in a time-triggered system. A communication controller of said kind realizes a communications network interface between a host computer and a time-triggered communication network (e.g., a TTP bus).

Time-triggered communication systems (e.g. TTP or FlexRay) offer a dependable communication solution for distributed embedded real-time systems. Due to the higher speeds that are achievable with time-triggered communication systems compared to conventional event triggered communication systems the amount of data handling and processing will typically increase for the individual node. This introduces a strong requirement for efficiency of the data handling.

At the same time safety-critical functions are currently introduced in many application domains (e.g. XbW in vehicle industries). This leads to the requirement of simple validation and verification of the communication solution.

Time-Triggered Protocols (TTP) are designed for implementing a time-triggered real-time system. For time-triggered systems the use of a communication layer, such as the FT-COM defined by OSEK consortium (http://www.osek-vdx.org) or the TTTech Computertechnik AG FT-COM product implementation, is state of the art. Common to these communication layers is that they are executed on the host-CPU and by this the application software has to share processing time on the host-CPU with the communication layer.

Mostly two types of FT-COM are in use:
- execution time optimized FT-COM such as the TTTech FT-COM: The TTTech FT-COM generates optimized tasks for communication handling. The result of the optimized generation will change, if processing or communication requirements are changed.
- table-driven FT-COM: a task is called via a table entry to start the data handler from a library. For each data handling a function call must be issued. The advantage of this solution is that the library has to be certified only once.

A table-driven FT-COM is often preferred due to reduced certification overhead, since only a one-time effort for certification is needed for the library of a table-driven realization, whereas for an optimized FT-COM certification has to be re-done completely. For the table-driven approach only the table needs to be re-certified in case of changes in the nodes schedule which may be done by an independent tool.

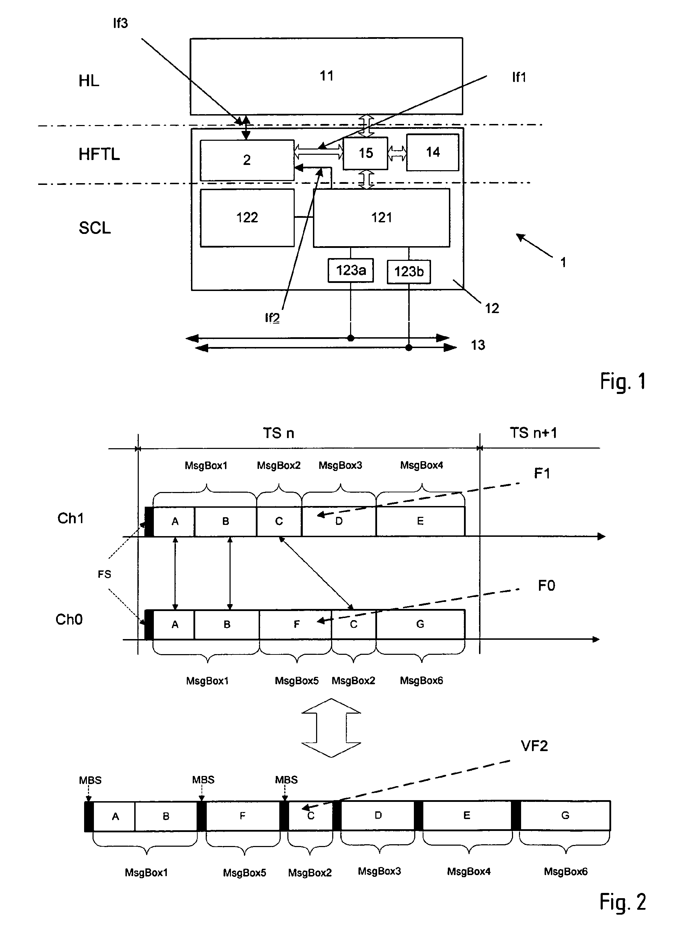

The following explanation referring to Fig. 2 is meant to clarify several expressions and terms used in this disclosure: Data which is transmitted/received in a TDMA slot (denoted TSn in Fig. 2) through a single communication channel, is called a Data Frame or, simply, a Frame. Two Frames F0, F1, sent via the channels Ch0, Ch1 respectively, are shown in the upper part of Fig. 2. From a logical point of view a Frame is composed by an arbitrary number of messages (denoted by capital letters A through G), which in turn are grouped into Message Boxes (denoted MsgBox1 through MsgBox6). All messages of a Message Box have an independent content, but share a common Message Box Status (denoted MBS). The smallest Message Box consists of only one message. TTP controllers are equipped with two communication channels Ch0, Ch1, herein also referred to as Channel 0 and Channel 1. Both channels may carry the same data (=redundant messages, in Fig. 2 identified by indentical capital letters) and/or individual messages. The scope of redundant messages is to improve the reliability of the communication process. However, the application itself does not need the same information twice. Therefore, we distinguish between Frames and Virtual Frames (V-Frames): A V-Frame merges the information received in a single time slot on both channels, whereas redundant information is contained in the V-Frame only once. In Fig. 2 a V-Frame VF2 is shown corresponding to the two Frames F0 and F1. We use the term unpacking (or, to unpack) for a process where Frames are merged to a V-Frame. Contrariwise we use the term packing (or, to pack), whenever the V-Frame figures as source and the Data Frames are generated from it. In this sense we use the term "packed frame" to refer to the content of a Frame and "unpacked frame" to refer to the content of a V-Frame. Furthermore this terminology should suggest, that Frames contain the information packed in a bit stream, while a V-Frame contains the same information in a structured manner (and without redundancy). Note that the Frame Status (FS) is generated by the SCL (Synchronization and Communication Layer) on receipt, the Message Box Status by the hardware FT/COM during the unpack procedure. Thus, when a V-Frame is packed and the respective Frames are transmitted, no status information has to be added at the side of the sender. The expression Action Time is used to refer to the point in time where a V-Frame /Frame should be processed by the hardware FT/COM.

Furthermore, the following abbreviations are used in this disclosure:
- C-MEDL :: COM Layer Message Descriptor List - memory block containing HFTL configuration
- CNI:: Communications Network Interface - memory block realizing an interface data storage means for data exchange between two layers HL and SCL.
- HL:: Host Layer - the application layer running in the host computer.
- HIL :: Host Interface Layer - used to exchange data between host computer and the design connected below the HIL. It shall support both sides, the host timing and the design connected below the HIL.
- HFTL :: Hardware Fault Tolerance Layer - used to unload the host CPU of a communication node providing a hardware support for low level tasks, such as handling redundancy or pack/unpack messages, which originally were implemented in software.
- SCL :: Synchronization and Communication Layer - the SCL is synchronizing message schedules.

Time-triggered systems are further described by H. Kopetz, in "Real-time systems: design principles for distributed embedded applications", Kluwer Academic Publishers 1997. For the purpose of the invention, reference is made, in particular, to subsections 1.5.5, 2.1.2, 2.1.3, 4.4.2, and 8.1.2 of that book.

As already mentioned, prior implementations of the FT-COM provide the complete functionality in software located at the host computer. This may lead to a considerable processing time overhead at the host. Moreover, time-triggered COM-Tasks must be scheduled to extract messages from frames before the frame buffer is overwritten; causing interruption of application tasks and a resulting task switching and processing time overhead.

### Summary of the invention

It is an objective of the present invention to overcome the above-mentioned drawbacks of prior art, and to relieve the host computer of the tasks of a communication node, providing a hardware support for the associated low level tasks.

This aim is met by a method for processing data frames exchanged over a communication controller between a host computer and a time-triggered communication network, with the steps of
- reading (accessing) a data frame from an interface data storage means accessible over a first interface,
- processing at least part of the data frame in at least one processor means preferably provided in said communication controller, wherein the data contained in said data frame is processed according to packaging information contained in a configuration table, and
- storing portions of the user data in the data frame in an associated memory range or set of
   registers of said interface data storage means as defined in said packaging information.

The present invention reduces the processing requirements on the host-CPU by provision of a separate co-processor that may run independently from the host. In contrast to a table-driven solution the hardware module avoids explicit calls through the time-triggered activation of operations. The complete functionality of the communication (COM) layer can be implemented in hardware, thus avoiding task switching and processing time overheads. It is, however, not necessary to implement the FT part in hardware since this part represents only a minor part of the FTCOM runtime.

Therefore, the invention allows more efficient schedules and can dramatically decrease the COM overhead. This will be of special importance for applications like those in the automotive field where it is anticipated that, with upcoming data rate and more complex architectures, also COM overhead will increase. Using a HW COM layer may free up to 80% CPU load at the host and prevent application tasks from interruption.

In a further developments of the invention, the processing according to the configuration table comprises adjusting the data format, such as adjusting to the word length of the host computer or adjusting the byte order to that of the host computer, and/or adjusting the data range or set of registers of user data processed.

Relating to unpacking of frames, preferably, data which is originating from the host computer and designed to be sent to the communication network, may be composed into a data frame using data from at least two memory regions described by the host computer according to the configuration table. In a variant, data designed to be sent may be composed into a data frame from at least two memory ranges or sets of registers or any combination of memory range and set of registers described by the host computer according to the configuration table; the memory ranges or being set/reset to a pattern (e.g., all bits '0' or '1') after the data frame has been sent.

Additionally, a data status may be generated, said data status comprising information about the channel over which the data are received, information whether data are sent in a redundant way, as well as a message age. Preferably, newly received but unvalidated data is prevented from overwriting valid data; and the message age of the data present in the memory or set of registers is adapted accordingly.

Furthermore, it is advantageous when in the configuration table the times are defined when the data are read/written in the memory regions jointly used with the host computer and/or the memory regions jointly used with the communication controller.

The address where the data are made available to the host computer may suitably be stored in the configuration table. The configuration table may further describe the types of operations which are executed during the data transfer between the communication controller and the host computer.

In the case of redundant data, transfer portions of valid data may, preferably, selected according to a prescription defined in the configuration table, in order to make data portions received in a redundant way available to the host computer only once. In this case, the redundant data portions are suitably checked for equality.

In development of the invention, different tasks belonging to the processing of data frames may be performed in parallel in a number of processing means provided in the communication controller.

In a like manner, the invention's aim is met by a processing device for a communication controller processing data frames exchanged between a host computer and a time-triggered communication network, having
- a processor means, and
- a first interface for accessing an interface data storage means,
wherein said processor means is adapted to process at least part of a data frame read from said interface data storage means according to packaging information contained in said configuration table, and to store portions of the user data in the data frame in an associated memory range or set of registers of said interface data storage means as defined in said packaging information.

The advantages of this device according to the invention were discussed with the method above. It should be noted that the processing device may be realized in a single module or chip, or may be realized by an arrangement of components.

An advantageous development of the processing device may further comprise the configuration table. Furthermore, it may comprise a second interface adapted to be connected to the host computer for the exchange of packaging information, and/or a third interface adapted to be connected to a protocol processor of said communication controller for the exchange of synchronization data such as a time reference signal.

### Brief description of the drawings

In the following, the present invention is described in more detail, with reference to the drawings showing respectively:
- Fig. 1: shows the hardware structure of a Communication Node supplied with a processing module according to the invention;
- Fig. 2: illustrates the Frame and V-Frame structure;
- Fig. 3: depicts the basic structure of the processing module shown in Fig. 1;
- Fig. 4: shows a variant architecture having multiple processing units;
- Fig. 5: shows another variant with multiple processing units sharing a common configuration table;
- Fig. 6: is a block diagram showing the internal structure of a Packaging Engine contained in the processing module of Fig. 3.
- Fig. 7: depicts the partitioning of the C-MEDL memory

### Detailed description of the invention

In the following a preferred embodiment of a processing device according to the invention, called 'Hardware FT/COM' (which is not to be confused with the term FT-COM used in the above introduction), is discussed. The processing device can be realized in hardware, preferentially as a stand-alone component, serving as a co-processor to the CPU of the host computer. Of course the invention is not limited to this specific embodiment; rather, those skilled in the art will recognize there are many other ways implementing the scope and spirit of the present invention.

Fig. 1 shows a communication node 1 which comprises a host computer 11 connected to a communication network 13 through a communication controller 12 (TTP controller), equipped with a Hardware FT/COM device 2 according to the invention. The Hardware FT/COM device 2 serves as a host-independent COM layer processing device and provides a packaging service, handles redundancy and generates message status information. The structure shown in Fig. 1 is a development from the hardware structure of a "conventional" TTP node (shown in Figure 8.2 of subsection 8.1.2 in the above-mentioned book by H. Kopetz), which implements the FT/COM functionality in software. Further components of the TTP controller 12 are a protocol processor 121 with associated TTP control data 122 realized in ROM, and bus guardians 123a, 123b. The protocol processor 121 realizes the SCL functions. The CNI (serving as interface data storage) is realized as a RAM device 14 which is accessible by means of a memory management unit 15 (MMU).

One objective of the hardware FT/COM device 2 is to relieve the host computer 11 of the tasks of a communication node, providing a hardware support for low level tasks of the CNI.

The data which should be packed/unpacked by the hardware FT/COM is located in the CNI memory 14, which can be accessed over the MMU interface If1. Furthermore, the hardware FT/COM 2 gets a Time Reference as well as a C-MEDL Description Identifier to be able to run synchronously to all other components in the system. This information is provided by the SCL via an SCL interface If2.

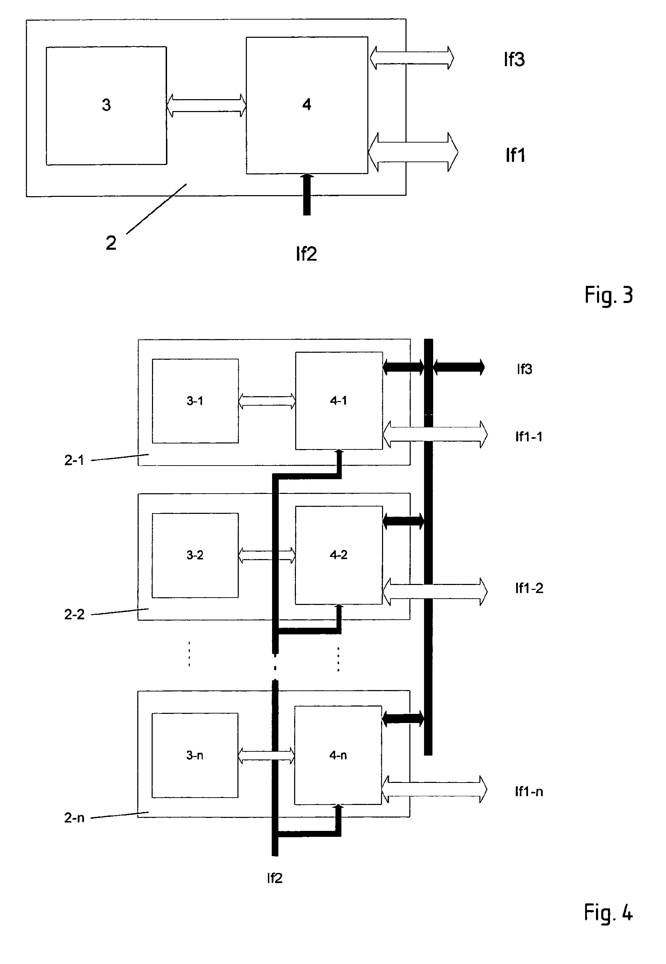

As shown in Fig. 3, the device 2 consists of two components:
• a memory 3 containing the packaging information, which memory is called C-MEDL (short for COM Layer MEDL) in the context of this embodiment;
• a Packaging Engine 4.

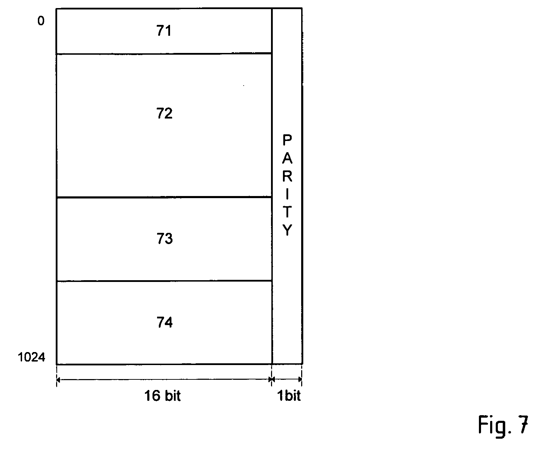

Referring to Fig. 7, the size of the C-MEDL memory implementation of the shown embodiment is 1024x17 bits. The upper 16 bits are used for the payload data and the least significant bit for parity protection. In contrast to the memory width, the number of lines, in this case 1024, has only a marginal impact to the resulting hardware implementation - increasing the memory size requires to add a bit to the address bus only, the remaining hardware will be left unchanged.

### From a logical point of view the C-MEDL memory shall be partitioned in four parts:

C-MEDL Header Area 71: The header area starts at the beginning of the C-MEDL memory.

C-MEDL Description Area 72: Contains an applications specific number of C-MEDL descriptions, which contain the packaging information of individual cluster rounds.

Data Type Description Area 73: This area contains the descriptions of data types. These data types are used to define the structure of individual Messages.

Public Data Type Description Area 74: Frequently used data types shall be stored here.

Although message structures may be quite different, there will exist a set of commonly used data types such as byte, word, double word and so on. Data types such as arrays or structures refer to their contained elements through pointers. The limited size of these pointers will require that identical data types referred from different arrays/structures have to be instantiated several times. To avoid this multiply instantiations a public data type area was introduced. Structures and array can address this area through absolute pointers

In the context of the embodiment, the packaging information will be referred to as C-MEDL description. Beyond pure message structure definitions, the C-MEDL description advantageously contains further parameters, such as point in time, where messages should be processed, their location in the CNI memory, etc. The C-MEDL 21 is, preferably, held by the processing device 2 and is not controlled by the CPU of the host computer 11. The packaging information will be provided to the hardware FT/COM device 2 during initialization phase by the Host. An additional host interface If3 may be used for the exchange of that information.

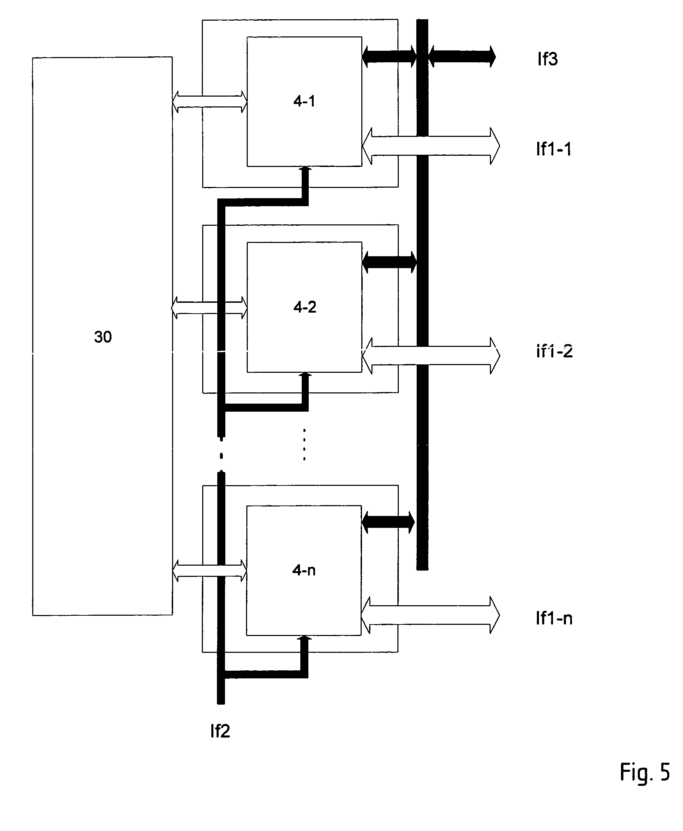

In order to improve the packaging performance, several instantiations of a hardware FT/COM can be packed into a single chip, as illustrated in Fig. 4. All hardware FT/COM instantiations 2-1, 2-2, ... 2-n operate concurrently - which part of a (V-)Frame(s) each instantiation processes can suitably be defined in the C-MEDL 3-1, ... 3-n.

It is also possible to use a common C-MEDL 30 for all Packaging Engines 4-1, ... 4-n as depicted in Fig. 5, in order to save memory resources. This, however, implies that the C-MEDL memory bandwidth is shared between all Packaging Engines, which may penalize the packaging performance of the resulting architecture.

Note that consistency of data stored in the CNI memory 14 has to be ensured, if more than one Packaging Engine operate on the same V-Frame/Frame. This can be achieved by a proper alignment of Message Boxes in the CNI memory.

In the embodiment of a Hardware FT/COM discussed here, two communication channels are used. In general, also more than two communication channels may be deployed. Furthermore, referring again to Fig. 1, additional components, in particular coprocessors, (not shown) may be present between the host computer 11 and the communication controller (TTP controller) 121.

In the following, the Packaging Engine 4 is explained in further detail.

### Packaging Engine - Internal Structure

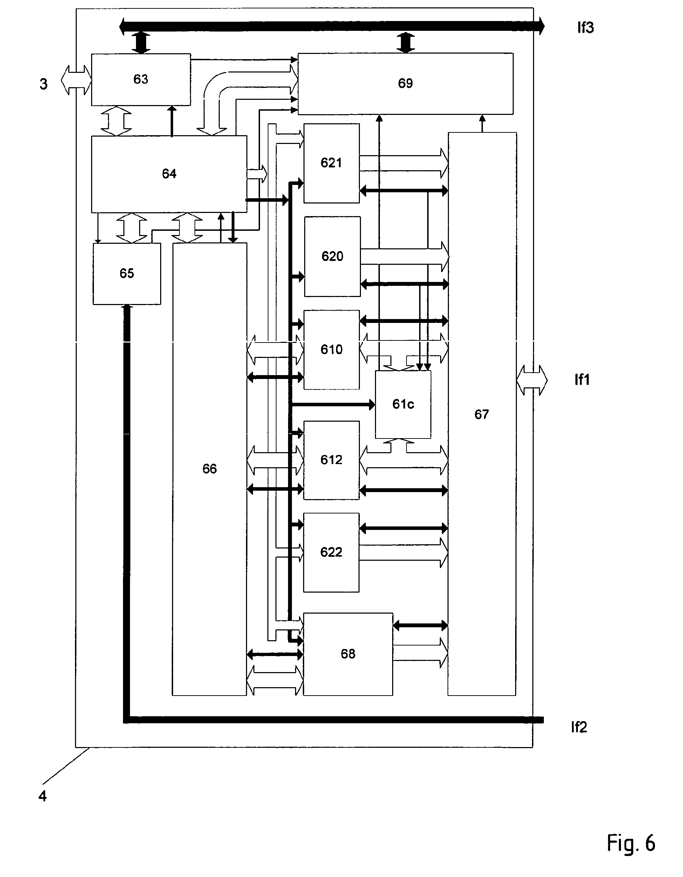

Referring to Fig. 6, the Packaging Engine 4 consists of a Status and Control unit 69, a set of Data FIFOs 610, 612 (namely, Data FIFO F = 610 and Data FIFO VF = 612) and Address Generators 620, 621, 622 (namely, Addr Gen Ch0 = 620, Addr Gen Ch1 = 621 and Addr Gen VF = 622), a Comparator 61c, a C-MEDL Access Controller 63, an Action Time Controller 65, a Bit Shifter 66, a Message Memory Access Controller 67, a Set-Reset unit 68 and a Sequencer 64.

The Sequencer 64 is the core component of the Packaging Engine 4 - it fetches packaging information from the C-MEDL and generates all control signals which are required to pack/unpack a frame. The Address Generators calculate the CNI memory addresses which are to be fetched/stored next. For this purpose they get the start address and the length information of each Message Box from the Sequencer 64. The Address Generators 621, 620 assigned to channel 1 and channel 0 share a common Data FIFO (= Data FIFO F) 610. To share a common Data FIFO is an optimization; for certain applications it is also possible to implement two separated FIFOs for channel 0 and channel 1, which are assigned to the corresponding address generators. The following explanation relates to the optimized implementation.
(a) If no redundant Message Boxes were received or should be transmitted, then only one Address Generator is active and thus only one Data FIFO is required.
(b) If a redundant Message Box was received, then both Address Generators have to be activated. In this case the Message Memory Access Controller redirects the data (and the associated control signals) fetched by Address Generator Ch0 to the data bus associated to Data FIFO V F. In contrast to Data FIFO F, Data FIFO V F does not store the data provided by the Message Memory Access Controller. Instead a speculative unpack procedure starts concurrently to the compare process, which uses the data of Data FIFO F as input and writes the unpacked data into DATA FIFO V F. This requires that Address Generators and Data FIFOs have to configured independently.
(c) If a Message Box should be transmitted on both channels, then the Message Memory Access Controller performs two write operations before a (write-) acknowledge is generated: For the first write operation the address provided by Address Generator Ch1 is used, for the second the address of Address Generator Ch0. Only when both write operations have been performed, then the WriteAck will be generated, causing that the Address Generators increments their addresses and the next data word is provided by the Data FIFO F.

The Data FIFO keeps data that should be stored to or were fetched from the CNI memory. This implies that the data flow direction of the Data FIFOs has to be configurable. The Message Memory Access Controller 67 coordinates the CNI memory accesses - depending on the actual needs the bandwidth of the MMU interface If1 may be assigned to a single component or shared between all components. If configured, redundant Message Boxes are compared bitwise by the Comparator unit 61c. A redundancy check failure is signalized to the Status and Control Unit 69. This unit contains all relevant status information and allows to setup the functionality of the hardware FT/COM. The C-MEDL Access Controller 53 coordinates the accesses to the C-MEDL memory 3 between the HIL (If3) and the Sequencer 64. The Action Time Controller 65 compares the Action Time specified in the C-MEDL and the reference time provided by the SCL over the interface If2 in order to determine the point in time where the next packaging process should occur.

### Packaging Engine - Initialization

Subsequent to a reset the C-MEDL 3 is empty/non initialized. Thus the Packaging Engine is automatically disabled. In this state the host CPU can download the C-MEDL description over the HIL port If3. When the download is complete, the host CPU activates the Packaging Engine by setting a corresponding bit in the control register in the Status and Control Unit 69. In this mode the host CPU has no access to the C-MEDL memory. In case of a hardware or software reset this bit is cleared and consequently the Packaging Engine is automatically disabled.

However the host CPU has still the possibility to disable the Packaging Engine again and thus acquire full access to the C-MEDL memory. Similar to the C-MEDL the control register of the hardware FT/COM has to be initialized by the hardware FT/COM.

### Packaging Sequence

The Packaging Engine starts to read the C-MEDL memory at the address 0x0000, see Fig. 7. The first fields contain the C-MEDL Header 71. The Sequencer compares the C-MEDL Description Identifiers stored in the C-MEDL Header with the identifier specified in the control register and jumps to the selected C-MEDL Description.

The first entry of a C-MEDL Description 72 is the Action Time, where the first frame of the selected cluster round should be processed. This value is copied by the Sequencer into the Action Time Controller. This unit compares the reference time with the value provided by the Sequencer and generates a Start Pack signal if both values match. If the reference value is greater than the Action Time specified in the C-MEDL , then a Fatal Error will be signalized.

Next to the Action Time, the addresses of the Message Box will be read out. These values are stored in the Address Generators 620, 621, 622. After it, the first Message Box description follows. The Message Box Control field is evaluated by the Sequencer 64 in order to setup the Packaging Engine.

Note that the above mentioned tasks can take place independently from the specified Action Time, due to the fact that they perform no message data manipulation. At this point, the Packaging Engine waits until the Action Time Controller activates the StartPack signal.

When the StartPack signal gets active, then all components of the Packaging Engine will be activated and the packaging procedure starts. Depending on the configuration a redundancy check may be performed previously to the packaging procedure.

The hardware FT/COM processes the C-MEDL in a cyclic manner. This means that when the last Message Box of a cluster round was processed, then the hardware FT/COM jumps to the first address of the C-MEDL and the described sequence starts again.

## Claims

1. A method for processing data frames exchanged over a communication controller between a host computer and a time-triggered communication network, **characterized by** the steps of
- reading a data frame from an interface data storage means (14) accessible over a first interface (If1),
- processing at least part of the data frame in at least one processor means (2, 4) preferably provided in said communication controller, wherein the data contained in said data frame is processed according to packaging information contained in a configuration table (3), and
- storing portions of the user data in the data frame in an associated memory range or set of registers of said interface data storage means as defined in said packaging information.

2. Method according to claim 1, wherein the processing according to the configuration table comprises adjusting the data format, such as adjusting to the word length of the host computer or adjusting the byte order to that of the host computer, and/or adjusting the data range or set of registers of user data processed.

3. Method according to claims 1 or 2, wherein data which is originating from the host computer and designed to be sent to the communication network, are composed into a data frame using data from at least two memory regions described by the host computer according to the configuration table.

4. Method according to any one of claims 1 to 3, wherein additionally a data status is generated, said data status comprising information about the channel over which the data are received, information whether data are sent in a redundant way, as well as a message age.

5. Method according to any one of claims 1 to 4, wherein newly received but unvalidated data is prevented from overwriting valid data; the message age of the data present in the memory or set of registers is adapted accordingly.

6. Method according to any one of claims 1 to 5, wherein data designed to be sent is composed into a data frame from at least two memory ranges or sets of registers or any combination of memory range and set of registers described by the host computer according to the configuration table; the memory ranges or being set/reset to a pattern (e.g., all bits '0' or '1') after the data frame has been sent.

7. Method according to any one of claims 1 to 6, wherein in the configuration table the times are defined when the data are read/written in the memory regions jointly used with the host computer and/or the memory regions jointly used with the communication controller.

8. Method according to any one of claims 1 to 7, wherein the address where the data are made available to the host computer are stored in the configuration table.

9. Method according to any one of claims 1 to 8, wherein the configuration table describes the types of operations which are executed during the data transfer between the communication controller and the host computer.

10. Method according to any one of claims 1 to 9, wherein in the case of redundant data transfer portions of valid data are selected according to a prescription defined in the configuration table, in order to make data portions received in a redundant way available to the host computer only once.

11. Method according to claim 10, wherein the redundant data portions are checked for equality.

12. Method according to any one of claims 1 to 11, wherein different tasks belonging to the processing of data frames are performed in parallel in a number of processing means provided in the communication controller.

13. A processing device (2) for a communication controller processing data frames exchanged between a host computer and a time-triggered communication network, **characterized by**
- a processor means (4), and
- a first interface (If1) for accessing an interface data storage means (14),
wherein said processor means (4) is adapted to process at least part of a data frame read from said interface data storage means (14) according to packaging information contained in said configuration table, and to store portions of the user data in the data frame in an associated memory range or set of registers of said interface data storage means as defined in said packaging information.

14. Processing device according to claim 13, further comprising said configuration table.

15. Processing device according to claim 13 or 14, further comprising a second interface (If3) adapted to be connected to the host computer for the exchange of packaging information.

16. Processing device according to claim 13, 14 or 15, further comprising a third interface (If2) adapted to be connected to a protocol processor of said communication controller for the exchange of synchronization data such as a time reference signal.
